# EUROPÄISCHE PATENTANMELDUNG

(11) **EP 1 905 642 A2**
(43) Veröffentlichungstag der Anmeldung: **02.04.2008**
(21) Anmeldenummer: 07017827.2
(22) Anmeldetag: 12.09.2007
(51) Int. Cl.: B60N 3/10

(54) **Halter für einen Getränkebehälter**

(30) Priorität: 26.09.2006 DE 102006045228
(71) Anmelder: fischer automotive systems GmbH, 72160 Horb (DE)
(72) Erfinder: Prowe, Burkhard, 72574 Bad Urach (DE)
(74) Vertreter: Suchy, Ulrich Johannes

(57) **Zusammenfassung**

Die Erfindung betrifft einen Halter (1) für zwei Getränkebehälter, der zum Einbau in einem Kraftwagen vorgesehen ist. Der Halter (1) weist einen Auszug (3) mit Einstellöffnungen (7) für die Getränkebehälter auf. Die Erfindung schlägt vor, den Auszug (3) nicht nur verschiebbar zu führen, sondern auch schwenkbar zu lagern, so dass wahlweise eine anstatt beider Einstellöffnungen (7) zugänglich und benutzbar ist.

## Beschreibung

Die Erfindung betrifft einen Halter für einen Getränkebehälter mit den Merkmalen des Oberbegriffs des Anspruchs 1.

Derartige auch Cupholder genannte Halter sind an sich bekannt. Sie sind beispielsweise zum Einbau in Armaturenbretter oder Mittelkonsolen von Kraftwagen vorgesehen. Die Halter weisen einen Auszug mit ein oder zwei Einstellöffnungen zum Einstellen von Getränkebehältern auf. Unter Getränkebehälter sind Getränkedosen, Tassen, Becher, Flaschen und dgl. zu verstehen. Der Auszug ist schubladenartig verschiebbar geführt, er kann von einer eingeschobenen Grundstellung in eine ausgezogene Gebrauchsstellung und umgekehrt verschoben werden. In der eingeschobenen Grundstellung ist der Auszug in beispielsweise dem Armaturenbrett oder der Mittelkonsole eines Kraftwagens versenkt, die Einstellöffnungen sind nicht zugänglich und der Auszug ist nicht benutzbar. In der ausgezogenen Gebrauchsstellung ragt der Auszug in einen Innenraum des Kraftwagens und die Einstellöffnungen sind zum Einstellen von Getränkebehältern zugänglich.

Aufgabe der Erfindung ist, einen Halter der vorstehend erläuterten Art vorzuschlagen, dessen beide Einstellöffnungen wahlweise einzeln oder beide zugänglich sind.

Diese Aufgabe wird erfindungsgemäß durch die Merkmale des Anspruchs 1 gelöst. Der Auszug des erfindungsgemäßen Halters ist nicht nur verschiebbar, sondern er ist auch um eine vertikale Achse schwenkbar. Durch Schwenken lässt sich der Auszug so bewegen, dass eine Seite des Auszugs in den Innenraum des Kraftwagens ragt und die Einstellöffnung auf dieser Seite zugänglich ist. Die andere Seite des Auszugs steht nicht aus beispielsweise dem Armaturenbrett oder der Mittelkonsole vor. Durch Schwenken in umgekehrter Richtung steht die andere Seite des Auszugs in den Fahrgastraum vor. Die Einstellöffnung auf der anderen Seite des Auszugs ist zum Einstellen eines Getränkebehälters zugänglich. Unverändert ist der Auszug des erfindungsgemäßen Halters verschiebbar, so dass beide Einstellöffnungen zugänglich sind.

Um eine Spaltbreite zwischen einer Öffnung, aus der der Auszug des Halters ausziehbar ist, und dem Aufzug klein zu halten, sind Seitenflächen des Auszugs bei einer Ausgestaltung der Erfindung konvex gerundet. Der Rundungsradius entspricht in bevorzugter Ausgestaltung der Erfindung in etwa einer Breite des Auszugs. Beim Schwenken des Auszugs bleibt die Spaltbreite dadurch gleich. Am breitesten ist der Auszug an seiner dem Fahrzeugraum zugewandten Vorderseite, so dass er in der eingeschobenen Grundstellung die Öffnung mit engen Spalten an beiden Seiten verschließt.

Um eingestellte Getränkebehälter besser gegen Kippen zu halten, sieht eine Ausgestaltung der Erfindung eine Seitenstütze vor, die sich beim Ausziehen des Auszugs nach oben bewegt und einen in die Einstellöffnung des Auszugs eingestellten Getränkebehälter seitlich abstützt. Die Seitenstütze kann beispielsweise einen Ring aufweisen, der an einem Arm nach oben schwenkbar am Auszug gelagert ist und federbetätigt nach oben schwenkt. Vorzugsweise ist für jede Einstellöffnung eine Seitenstütze vorgesehen.

Eine Ausgestaltung der Erfindung sieht eine Fußstütze vor, die sich beim Ausziehen des Auszugs nach unten bewegt und auf der ein in die Einstellöffnung eingestellter Getränkebehälter steht. Durch die Fußstütze lässt sich die eine Einstelltiefe der Einstellöffnung vergrößern, so dass ein in die Einstellöffnung eingestellter Getränkebehälter besser gegen Kippen gehalten ist.

Die Erfindung wird nachfolgend anhand eines in der Zeichnung dargestellten Ausführungsbeispiels näher erläutert.

Die vier Figuren zeigen einen erfindungsgemäßen Halter für einen Getränkebehälter in vier verschiedenen Stellungen. Die Zeichnung ist als vereinfachte und schematisierte Darstellung zum Verständnis und zur Erläuterung der Erfindung zu verstehen.

Der in der Zeichnung dargestellte, erfindungsgemäße Halter ist zum Einbau in beispielsweise ein Armaturenbrett oder eine Mittelkonsole eines nicht dargestellten Kraftwagens vorgesehen. Das Armaturenbrett oder die Mittelkonsole sind in der Zeichnung als Blende 2 dargestellt, in deren Öffnung ein Auszug 3 des Halters 1 angeordnet ist. Der Auszug 3 hat die Form einer Platte, die im Ausführungsbeispiel breiter als lang ist. Dabei ist Länge die Abmessung in einer Verschieberichtung des Auszugs 3, d. h. senkrecht zur Blende 2.

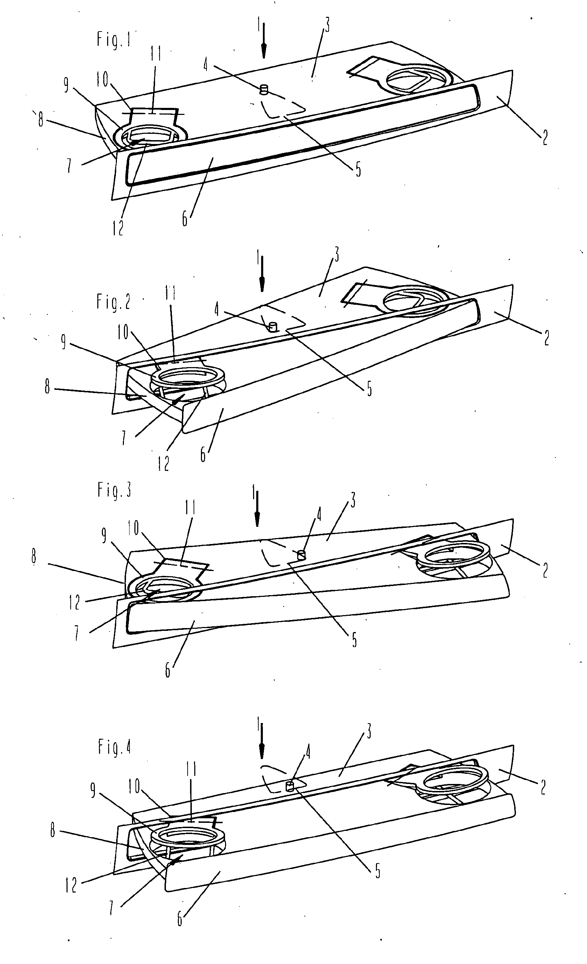

An seiner Oberseite weist der Auszug 3 einen Zapfen 4 auf, der in eine ortsfeste, mit Strichlinien angedeutete dreiecksförmige Ausnehmung 5 eingreift. Die dreiecksförmige Ausnehmung 5 ist senkrecht zur Blende 2 und mit einer Grundseite parallel zur Blende 2 angeordnet. Der Zapfen 4 ist in seitlicher Richtung gesehen in der Mitte des Auszugs 3 angeordnet. Auf der Unterseite weist der Auszug 3 einen achsgleich angeordneten Zapfen auf, der in eine deckungsgleiche Ausnehmung eingreift. Der Zapfen und die Ausnehmung auf der Unterseite sind durch den Auszug 3 verdeckt und deswegen in der Zeichnung nicht zu sehen. Mit dem Zapfen 4 ist der Auszug 3 in der Ausnehmung 5 verschiebbar geführt und schwenkbar gelagert. Der Auszug 3 lässt sich aus der in Figur 1 dargestellten Grundstellung in die in Figur 4 dargestellte ausgezogene Gebrauchsstellung verschieben. In der Grundstellung schließt eine Vorderseite 6 des Auszugs 3 bündig mit der Blende 2 ab, der Auszug 3 ist versenkt. In der in Figur 4 dargestellten Gebrauchsstellung steht der Auszug 3 aus der Blende 2 in einen Fahrgastraum des nicht dargestellten Kraftwagens vor.

Nahe seiner Vorderseite weist der Auszug 3 an beiden Seiten je eine Einstellöffnung 7 zum Einstellen je eines nicht dargestellten Getränkebehälters wie beispielsweise einer Getränkedose, eines Bechers, einer Tasse, einer Flasche oder dgl. auf. In der eingeschobenen Grundstellung befinden sich die Einstellöffnungen 7 hinter der Blende 2, sie sind nicht zugänglich. In der ausgezogenen Gebrauchsstellung befinden sich die Einstellöffnungen 7 vor der Blende 2 und sind zum Einstellen von Getränkebehältern zugänglich.

Durch die Schwenklagerung mit den Zapfen 4 in den Ausnehmungen 5 auf der Ober-und der Unterseite ist der Auszug 3 um eine gedachte vertikale Achse durch die Zapfen 4 in beiden Richtungen in die in Figuren 2 und 3 dargestellten Stellungen schwenkbar. In den geschwenkten Stellungen steht der Auszug 3 jeweils auf einer Seite aus der Blende 2 vor, es befindet sich eine der Einstellöffnungen 7 zugänglich vor der Blende 2. Die andere Einstellöffnung 7 bleibt hinter der Blende 2 versenkt und ist in den in Figuren 2 und 3 dargestellten, geschwenkten Stellungen des Auszugs 3 nicht benutzbar.

Seitenflächen 8 des Auszugs 3 sind kreisbögenförmig konvex gerundet, wobei ein Rundungsradius einer Breite des Auszugs 3 entspricht. Die breiteste Stelle des Auszugs 3 ist dessen Vorderseite 6, die die Öffnung in der Blende 2 bei in die Grundstellung eingeschobenem Auszug 3 mit engen Spalten schließt. Durch die Krümmung der Seitenflächen 8 bleiben die Spalten zwischen der Öffnung der Blende 2 und dem Auszug 3 beim Schwenken in die in Figuren 2 und 3 dargestellten Stellungen eng.

An der Oberseite weist der Auszug 3 für jede Einstellöffnung 7 eine ringförmige Seitenstütze 9 auf, die die Einstellöffnung 7 umschließt. Die Seitenstütze 9 weist einen radial abstehenden Arm 10 auf, von dessen Ende in der Zeichnung verdeckte Zapfen seitlich nach außen abstehen, die in ebenfalls verdeckte Lagerlöcher des Auszugs 3 eingreifen. Die Seitenstütze 9 ist dadurch um eine gedachte horizontale Schwenkachse 11 nach oben schwenkbar. Ein ebenfalls verdecktes und deswegen nicht sichtbares Federelement schwenkt die Seitenstütze 9 beim Ausziehen des Auszugs 3 nach oben, wie in Figuren 2 - 4 zu sehen. Ein eingestellter Getränkebehälter ist dadurch in größerer Höhe seitlich abgestützt und kippsicher in der Einstellöffnung 7 des Auszugs 3 gehalten. Beim Einschieben des Auszugs 3 drückt ein oberer Rand der Öffnung der Blende 2 die Seitenstützen 9 nach unten in eine in Figur 1 dargestellte, in der Oberseite des Auszugs 3 versenkte Stellung.

In vergleichbarer Weise wie die Seitenstützen 9 weist der Auszug 3 an seiner Unterseite Fußstützen 12 auf, die eine Unterseite der Einstellöffnungen 7 an der Unterseite des Auszugs 3 überdecken und nach unten schwenkbar im Auszug 3 gelagert sind. Die Fußstützen 12 schwenken beim Ausziehen des Auszugs 3 durch Schwerkraft nach unten und werden beim Einschieben des Auszugs 3 in die in der Blende 2 versenkte Grundstellung von einem unteren Rand der Öffnung der Blende 2 nach oben an die Unterseite des Auszugs 3 geschwenkt. In die Einstellöffnungen 7 eingestellte Getränkebehälter stehen auf den bei ausgezogenem Auszug 3 nach unten geschwenkten Fußstützen 12. Die Fußstützen 12 vergrößern eine Einstelltiefe der Einstellöffnungen 7 und verbessern dadurch ebenfalls den Seitenhalt eingestellter Getränkebehälter und damit deren Kippsicherheit.

## Patentansprüche

1. Halter für einen Getränkebehälter, mit einem Auszug (3), der zwei Einstellöffnungen (7) für Getränkebehälter aufweist, und der zwischen einer eingeschobenen Grundstellung und einer ausgezogenen Gebrauchsstellung hin und her verschiebbar geführt ist, wobei in der ausgezogenen Gebrauchsstellung die beiden Einstellöffnungen (7) zum Einstellen von Getränkebehältern zugänglich sind, **dadurch gekennzeichnet, dass** der Auszug (3) schwenkbar ist, so dass wahlweise eine der beiden Einstellöffnungen (7) zugänglich ist.

2. Halter nach Anspruch 1, **dadurch gekennzeichnet, dass** Seitenflächen (8) des Auszugs (3) konvex gerundet sind.

3. Halter nach Anspruch 2, **dadurch gekennzeichnet, dass** ein Rundungsradius der Seitenflächen (8) etwa der Breite des Auszugs (3) entspricht.

4. Halter nach Anspruch 2, **dadurch gekennzeichnet, dass** der Auszug (3) an einer Vorderseite (6) am breitesten ist.

5. Halter nach Anspruch 1, **dadurch gekennzeichnet, dass** der Auszug (3) eine Seitenstütze (9) für die Einstellöffnung (7) aufweist, die sich beim Ausziehen des Auszugs (3) nach oben bewegt und einen in die Einstellöffnung (7) eingestellten Getränkebehälter seitlich abstützt.

6. Halter nach Anspruch 1, **dadurch gekennzeichnet, dass** der Auszug (3) eine Fußstütze (12) aufweist, die sich beim Ausziehen des Auszugs (3) nach unten bewegt und auf die ein Getränkebehälter durch die Einstellöffnung (7) stellbar ist.
